# EUROPEAN PATENT SPECIFICATION

(11) **EP 3 850 075 B1**
(45) Date of publication and mention of the grant of the patent: **07.06.2023**
(21) Application number: 19769598.4
(22) Date of filing: 13.09.2019
(51) Int. Cl.: C12C 3/08, C12C 11/11, C12C 13/00, C12C 7/20

(54) **SYSTEM FOR INSERTING ADDITIVES IN A FLOWING LIQUID FOODSTUFF**
SYSTEM ZUM EINBRINGEN VON ZUSATZSTOFFEN IN EIN FLIESSFÄHIGES LEBENSMITTEL
SYSTÈME D'ADJONCTION D'ADDITIFS DANS UN PRODUIT ALIMENTAIRE LIQUIDE EN ÉCOULEMENT

(30) Priority: 14.09.2018 BE 201805631
(43) Date of publication of application: 21.07.2021
(73) Proprietor: Agidens Process Automation NV, 2070 Zwijndrecht (BE)
(72) Inventor: VERSCHUEREN, Kim, 2070 Zwijndrecht (BE)
(74) Representative: EP&C
(86) International application number: PCT/IB2019/057727
(87) International publication number: WO 2020/053821

(56) References cited:
- DE-A1- 2 228 497
- DE-A1-102013 101 435
- DE-A1-102016 121 249
- US-A1- 2014 186 505
- US-A1- 2016 145 550

## Description

The present invention relates to the insertion of additives in a flowing liquid foodstuff, in particular to the insertion of hop pellets in flowing beer.

During the preparation of foodstuffs, various additives are added to the foodstuffs. Beer includes e.g. malt and hops, and sometimes additional additives that affect the flavour. In a traditional brewing process, malt is first boiled up with water and the so-called wort is produced. After the cooling, the adding air and yeast, and the start of the fermentation, the wort will be converted into beer. Traditionally, hops are added to the wort in the brewing kettle. If hops are added later, for example for extra flavour, for example in the fermentation tank as the worth already become beer, this is also called dry hopping. Either way, the hop is traditionally added by an operator, usually by means an opening at the top of the brewing kettle or fermentation tank. Because the fermentation tank is usually relatively high, this has the disadvantage that the operator has to carry a relatively heavy bag pellets upwards, for example, by means of a stairway or ladder, to add the pellets. Therefore, there is a need for a system to make it easier to add hops to beer.

It is known, for example from GB2531054, to provide a smaller tank for arranging the hop in and to transport it by means of air pressure to the top of the fermentation tank.

It is known to provide a smaller tank for arranging the hop in, and to pump the beer through said tank, so that aromas are transferred from the hop to the beer. The smaller tank is usually equipped with filters to prevent the hop from ending up in the beer flow and the fermentation tank.

It is known, for example from EP2500408B1, to provide a smaller tank for arranging the hop in, and to provide a shear pump for intensively mixing the hop and the beer. The pump in EP2500408B1 has two inlets, one for the beer and the other for the hop. The beer and the hop are mixed in the pump. DE2228497 discloses a device for inserting hop pellets into beerwort comprising a conical hop receiving vessel (1) with a lid having two compartments for housing two batches being impermeable to air and comprising inert gas (carbon dioxide or nitrogen) at super-atmospheric pressure.

It is an object of the invention to provide a better, or at least an alternative, system and method for inserting additives in a flowing liquid foodstuff.

This object is achieved with a system for inserting additives in a flowing liquid foodstuff, comprising
- a tank comprising:
   I. an additive receiving compartment adapted to receive additives,
   II. a first chamber adapted to be vented by a venting system,
   III. a pipe connection, adapted to
      ▪ be connected to a pipe where the flowing liquid foodstuff is in, and
      ▪ insert the additives in the flowing liquid foodstuff,
   IV. a first valve arranged between the additive receiving compartment and the first chamber, wherein the first valve
      ▪ has an open position wherein additives can be transferred from the additive receiving compartment to the first chamber, and
      ▪ has a closed position wherein additives can be received in the additive receiving compartment while the first chamber can be vented and / or additives can be inserted in the flowing liquid foodstuff via the pipe connection.

The invention relates to a system for inserting additives in a flowing liquid foodstuff. The additives can optionally be hop pellets, and the flowing liquid foodstuff may optionally be beer. In this context, hop generally refers to products originating from the humulus lupulus plant. In this context, the term additives also encompasses products that are added to the liquid foodstuff and later at least partially removed again, for example after they have transferred flavour and / or aromas. In this context, beer can also be a not yet finished product in the brewing process, for example wort. Also if the flowing liquid foodstuff is another product, for example a dairy product or another beverage, this can be a not yet finished product in a production process. It is also possible that the liquid foodstuff is not intended for human consumption, but for example for animal food.

The system according to the invention comprises a tank, which comprises an additive receiving compartment which is adapted to receive additives. The additives can optionally be arranged in the additive receiving compartment by an operator, for example batch by batch. If the additives are arranged by an operator, the additive receiving compartment is preferably easily accessible for the operator, for example at an easily accessible location and / or height, for example maximal at the operator's chest height. However, it is also possible for the additives to be arranged into the additive receiving compartment in an automated manner, for example via an additive pipe connecting the additive receiving compartment to an additive supply or additive buffer compartment, which may or may not be part of the system or the tank.

The tank further comprises a first chamber, which can be vented by a venting system. In this context, venting means at least partially expelling oxygen-containing air, for example by adding an inert gas or by arranging the first chamber under an at least partial vacuum. Venting is desirable to prevent oxygen from entering the liquid foodstuff, which in beer for example can lead to oxidation of the beer and aldehyde. For example, oxygen in the beer after the first fermentation can stimulate the formation of acetic acids and diacetyl, which affects the flavour of the beer.

The tank further comprises a pipe connection, which can be connected to a pipe. The flowing liquid foodstuff is in said pipe, and the additives can be inserted in the flowing liquid foodstuff via the pipe connection. The pipe connection can optionally be connected to a T-junction of the pipe. For example, the pipe connection may be adapted to be connected to a T-junction of the pipe, the T-junction preferably being adapted such that the liquid foodstuff can flow through a substantially straight piece of pipe, and the pipe connection is connected to a branch of said substantially straight piece of pipe. In the context of this invention, a T-junction includes a branch of 90 °, 45 °, or another angle, as well as a curved branch. Optionally, the pipe connection has a smaller diameter than the pipe at the location where it is connected to the pipe. Optionally the pipe connection is a part of the first chamber, for example at the bottom of the first chamber. Optionally, there are other components present between the first chamber and the pipe connection, such as, for example, a second chamber.

The liquid foodstuff flows through a pipe. Said pipe can, for example, be part of a circulation flow, which for example has the same starting and end point, for example a liquid foodstuff tank. It is also possible for the pipe to bring the liquid foodstuff from a starting point to an end point, the end point being different from the starting point, for example where a next step in the production process of the liquid foodstuff is carried out at the end point. Optionally, the liquid foodstuff flows at least partially through the pipe under the influence of gravity. Optionally, a pump is provided that makes the liquid foodstuff flow through the pipe.

The pipe can be made of a suitable material for the foodstuff, for example a hard material, e.g. a metal such as aluminum, steel or stainless steel, or a soft or flexible material such as an elastomer, rubber, plastic or PVC. The term pipe in this context encompasses among others pipes, tubes, hoses and conduits.

The tank further comprises a first valve, which is arranged between the additive receiving compartment and the first chamber. The first valve has at least an open position and a closed position. In the open position, additives can be transferred from the additive receiving compartment to the first chamber, and in the closed position, additives, for example a second batch of additives, can be received in the additive receiving compartment while the first chamber can be vented and / or additives, for example a first batch of additives, can be inserted in the flowing liquid foodstuff through the pipe connection. The first valve can optionally be a butterfly valve or a gate valve. In the open position, the additives are preferably transferred from the additive receiving compartment to the first chamber at least partially with the aid of gravity. In the context of this invention, the opening of a valve is generally understood to mean arranging said valve in an open position, and the closing of a valve is meant to arrange said valve in a closed position.

The invention thus provides a system with a tank comprising an additive receiving compartment and a first chamber, which are connected via a first valve. An advantage of the invention is that when the first valve is in the closed position, a second batch of additives can be arranged in the additive receiving compartment while the rest of the process can proceed with a previously arranged first batch of additives. For example, the first chamber can be vented simultaneously while the first batch of additives is therein, or the first batch of additives can be added to the flowing liquid foodstuff. This allows to add a plurality of batches of additives without stopping the process. It also allows to add additives practically continuously. This is in particular an advantage in view of recent developments in the beer industry. Traditionally, beers that contained a lot of hops or additives were mainly specialties that are brewed on a small scale. Due to the increasing popularity, on the one hand the demand of these products is increasing and on the other hand the interest of large brewers to brew beers in this category. The invention makes it possible to add additives to large volumes of liquid foodstuff, without having to stop or interrupt the process. The additive receiving compartment can also function as a kind of buffer where a supply of additives can be provided.

The invention further provides to add the additives to the liquid foodstuff while it is flowing in the pipe. This has the advantage that the additives are distributed in the liquid foodstuff by the flow, and that they are immediately taken along in said flow. For example, if the additives are hop pellets and the liquid foodstuff is beer, the flow can accelerate the transfer of flavour and aromas, for example by reducing the time required for this by a factor of 2-3.

The invention furthermore provides that no oxygen enters the liquid foodstuff by venting the first chamber. This prevents unwanted reactions in the liquid foodstuff.

In an embodiment, the system comprises the venting system. In an embodiment, the venting system is adapted to expel air from the first chamber containing oxygen with an inert gas. For example, at a lower part of the first chamber a nozzle may be provided adapted to supply the inert gas through, and an upper part of the first chamber may be provided with a nozzle adapted to discharge the oxygen containing air through. Both nozzles are optionally adapted to connect a valve to, which valves preferably have a smaller diameter than the first valve.

In an embodiment, the system further comprises a pressure system. Optionally, the pressure system and the venting system are the same, i.e. a single system. In an embodiment the pressure system is adapted to pressurize the pipe connection at a pressure that is greater than the pressure of the liquid foodstuff in the pipe. In an embodiment the pressure system is adapted to pressurize the pipe connection at a pressure between 0.1 and 4 barg, preferably between 1.0 and 2.0 barg, for example 1.5 barg. In an embodiment, the pressure system is arranged to pressurize the pipe connection at a pressure between 1.1 and 2.25 bar, for example 1.75 bar. In an embodiment the pressure system is adapted to supply a gas to the pipe connection at a gas flow between 0.1 and 2 bar, preferably 0.2 bar greater than the pressure in the pipe in which the flowing liquid foodstuff is. The above-mentioned embodiments of the pressure system can be provided both in combination and separately.

The pressure system is adapted to provide a pressure in the pipe connection, for example by supplying a gas, for example an inert gas. The pressure is preferably greater than the pressure of the liquid foodstuff. For example, if the liquid foodstuff is beer, a pressure between 0.1 and 4 barg, preferably between 1.0 and 2.0 barg, for example 1.5 barg, may suffice. The pressure system ensures on the one hand that the liquid foodstuff does not end up in the tank via the pipe connection and, for example, makes the additives wet, which for example can lead to expansion of the additives, and on the other hand that the additives end up more easily in the liquid foodstuff.

In an embodiment, the first chamber comprises the pipe connection. The pipe connection can for example be located at the bottom of the first chamber, while the first valve is for example located at the top of the first chamber.

In an embodiment, the open position of the first valve is adapted to transfer the additives from the additive receiving compartment into the first chamber with the aid of gravity. The first chamber can, for example, be located below the additive receiving compartment.

In an embodiment, the tank further comprises a second chamber and a second valve arranged between the first chamber and the second chamber. The second valve has an open position wherein additives, for example a first batch of additives, can be transferred from the first chamber to the second chamber, and a closed position wherein the first chamber can be vented, for example while a second batch of additives is in the first chamber, while additives, for example the first batch of additives, can be inserted in the flowing liquid foodstuff via the pipe connection.

In this embodiment, a second chamber is provided in the tank such that the first chamber can be vented without the process having to be stopped. For example, a batch of additives can be inserted in the liquid foodstuff via the pipe connection while a subsequent batch is already being vented in the first chamber. Optionally, a third batch of additives can be arranged in the additive receiving compartment at the same time. The continuity of inserting additives is thus further increased in this embodiment.

In a further embodiment, the second chamber comprises the pipe connection. For example, the pipe connection can be at the bottom of the second chamber while the second valve is for example at the top of the second chamber.

In an embodiment wherein the system also comprises the pressure system, the venting system is connected to the first chamber and the pressure system is connected to the second chamber. In a further embodiment, the pressure system and the venting system comprise a common gas supply, for example a gas tank or a gas distribution system, for example provided with an inert gas, wherein the venting system provides a gas pipe connection to the first chamber and the pressure system a gas pipe connection to the second chamber. Optionally, the venting system and / or the pressure system comprise one or more pressure regulators adapted to control the pressure of the supplied gas.

In an embodiment, the open position of the second valve is such that the additives are transferred from the first chamber to the second chamber with the aid of gravity. The second chamber may, for example, be located below the first chamber.

In an embodiment, the system is adapted to insert the additives from the pipe connection in the pipe with the aid of gravity. The flowing liquid foodstuff may, for example, be located below the tank or at least below the pipe connection.

In an embodiment the pipe connection is adapted such that during the insertion of the additives in the flowing liquid foodstuff, all components of the pipe connection are arranged in a passive position. For example, if the pipe connection comprises a pipe connection valve, it may be passively arranged in an open position during the insertion of the additives. It is also possible that the pipe connection only comprises passive components. Either way, the pipe connection in this embodiment does not contain any components that are active during the insertion of the additives, such as, for example, a pump.

In an embodiment, the pipe connection is funnel-shaped and / or the pipe connection comprises a reducer.

In an embodiment, an end diameter of the pipe connection is smaller than the diameter of the first chamber and / or the second chamber, and preferably smaller than the diameter of the pipe.

In an embodiment, the additive receiving compartment is funnel-shaped. This simplifies the inserting of additives.

In an embodiment, the additive receiving compartment comprises either an open top, or a lid to close the additive receiving compartment, which is further adapted to be opened while the first chamber is being vented and / or additives are being inserted via the pipe connection in the flowing liquid foodstuff. In this way, it is possible to add additives during the process. It is further possible to provide a lid during cleaning, or if there is a danger of contamination from the environment, for example due to condensation or leaks from overhead pipes.

In an embodiment, the tank is at least partially cylindrical, wherein for example at least the first chamber and / or the second chamber are at least partially cylindrical.

In an embodiment, the first chamber has a maximum diameter between 100 and 500 mm, for example 200 mm, and a height between 100 and 500 mm, for example 250 mm. These dimensions are suitable for the desired amounts of additives and usual amounts of beer.

In an embodiment, the second chamber has a maximum diameter between 100 and 500 mm, for example 200 mm, and a height between 100 and 500 mm, for example 250 mm. These dimensions are suitable for the desired amounts of additives and usual amounts of beer.

In an embodiment, the venting system and / or the pressure system comprises a gas pipe adapted to connect the tank to a gas supply, for example a gas tank or a gas distribution system. The gas pipe preferably has a diameter between 0.25" and 1", or between 6 and 25 mm. Since the inert gas is mainly required for venting and / or pressurizing the pipe connection, only relatively small volumes of gas are required, and the gas pipes can therefore be implemented with small diameters.

In an embodiment, the venting system and / or the pressure system comprises a gas tank for an inert gas, wherein the gas tank is connected to the tank via a gas pipe. An inert gas is advantageous for these applications, because it does not cause reactions with the additives and / or the liquid foodstuff. The inert gas can optionally be CO₂ or N₂.

In an embodiment, the gas tank has a volume between 10 and 50 liters, for example 20 liters. The gas tank can for example be designed as a bottle or cylinder, for example a CO₂ bottle or cylinder.

In an embodiment, the venting system and / or the pressure system is adapted to be connected to a gas distribution system that is available at the location where the system according to the invention is located.

In an embodiment, the pipe connection comprises a pipe connection valve. The pipe connection valve can optionally have an open position, wherein additives can be inserted in the pipe, and a closed position, wherein additives cannot be inserted in the pipe. The pipe connection valve can optionally be arranged in the closed position when the first chamber is vented. The pipe connection valve may optionally be a butterfly valve, a ball valve or a gate valve are. The pipe connection valve can optionally be operated manually and / or be controlled by an actuator.

In an embodiment, the system further comprises the pipe, or at least the part of the pipe to which the pipe connection can be connected.

In an embodiment the pipe comprises a reducer and an expander, with a pipe section therein between of which the diameter is smaller than the diameter of the rest of the pipe, wherein the pipe section is adapted to be connected to the pipe connection of the tank. In this embodiment use is made a Venturi effect, because the velocity of the liquid foodstuff in the pipe section is greater since the diameter is smaller. It follows from Bernouilli's law that the pressure in said pipe section is therefore smaller, which creates a suction effect on the additives that are present in the pipe connection. The pipe member may optionally contain a T-junction adapted to connect the pipe connection to.

In an embodiment, a branch of the pipe is connected to the pipe connection of the tank, wherein the branch is adapted to transfer liquid foodstuff to the pipe connection, wherein the branch preferably has a diameter that is smaller than the diameter of the pipe and / or the diameter of the pipe connection. Optionally, said branch also includes a valve. Said branche can for example be used to clean the pipe connection. For example, a cleaning agent, which optionally is or comprises water, may be pumped through the pipe which flows through said branch through the pipe connection.

In an embodiment the pipe comprises one, two or more coupling pieces, which coupling pieces are adapted to connect a flexible pipe. The flexible pipe can optionally be connected at another end to a liquid foodstuff tank. In this way the pipe, and as such the tank, can for example be used with different liquid foodstuff tanks. In the context of this invention, a flexible pipe means a pipe piece that is intended to be connected to a coupling piece in a manner that it can be easily disconnected again by an operator. The flexible pipe may optionally comprise an elastomeric material such that the flexible pipe is at least partially bendable.

In an embodiment, the system further comprises a circulation pump adapted to cause the liquid foodstuff to flow through the pipe. It can as such be ensured that the liquid foodstuff flows in the pipe.

In a further embodiment the pipe connection of the tank is connected to the pipe on a suction side of the circulation pump. It can as such be ensured that the liquid foodstuff can be pumped together with the inserted additives. The additives and the liquid foodstuff arrive together at an inlet of the circulation pump, which preferably has only a single main inlet. In other words, the additives are inserted in the liquid foodstuff before they arrive at the circulation pump together, in contrast to EP2500408B1, where the pump with two inlets causes the mixing. In addition, this embodiment can be advantageous because on the suction side of the circulation pump, the liquid pressure in the liquid foodstuff is the lowest, and the additives can therefore be inserted in the liquid foodstuff more easily. The pressure system, if present, is thus only required to provide a lower pressure.

In an embodiment, the circulation pump is a centrifugal pump. A centrifugal pump is advantageous because it can provide the pumping function without damaging the additives. Other pumps, such as the shear pump which an essential part of EP2500408B1, may crush additives, for example, hop pellets. This is not necessary and often even undesirable. The flow that a centrifugal pump produces is sufficient to disintegrate the hop pellets into the beer to convey the flavour and aromas. Because the hop pellets are not crushed it is further easier to later filter the beer. In addition, the crushing can cause a too strong hop flavour in the beer that is too strong.

In an embodiment, the system further comprises a liquid foodstuff tank, wherein a pressure side of the circulation pump is connected to the liquid foodstuff tank, for example via the pipe, a second pipe, and / or a flexible pipe. For example, if the liquid foodstuff is beer, the liquid foodstuff tank can be a fermentation tank. The liquid foodstuff tank is arranged such that the circulation pump pumps the liquid foodstuff together with the inserted additives in the liquid foodstuff tank. Optionally, the liquid foodstuff tank has a capacity between 10 hl and 6000 hl, and / or a diameter between 1 m and 5 m, and / or a height between 2 m and 25 m.

In a further embodiment, the circulation pump is adapted to pump the liquid foodstuff through on a lower part of the liquid foodstuff tank into the liquid foodstuff tank. Preferably, the circulation pump is connected to a lower part of the liquid foodstuff tank. This ensures that all components are relatively low and therefore easily accessible. This is advantageous with regards to maintenance and follow-up. Also, no expensive adjustments are required on existing tanks.

In an embodiment, the suction side of the circulation pump is connected to the liquid foodstuff tank, for example via the pipe, a second pipe, and / or a flexible pipe. In this embodiment, a circulation can be provided starting at the liquid foodstuff tank, then passing along the pipe connection of the tank such that the additives can be added, and then again going to the liquid foodstuff tank by means of the circulation pump. However, it is also possible that additional components are present in the circulation, for example a second tank to add a second type of additives, and / or a manifold that allows to circulate along the tank with different liquid foodstuff tanks. Preferably, the pipe on the suction side of the circulation pump is connected to the lower part of the liquid foodstuff tank, such that the liquid foodstuff can at least in part be circulated with the aid of gravity. Optionally a pump is provided to pump the liquid foodstuff from the liquid foodstuff tank to the tank.

In an embodiment, the system comprises a cleaning pipe connected to the additive receiving compartment. The cleaning pipe is adapted to provide a cleaning agent, which optionally is or comprises water, in the additive receiving compartment in order to clean the tank. Optionally, the cleaning pipe is connected to a spray head in the additive receiving compartment, adapted to spray the cleaning agent into the additive receiving compartment. Optionally, the additive receiving compartment comprises a lid for closing off the additive receiving compartment during cleaning, for example at least in a liquid-tight manner.

In a further embodiment, the cleaning pipe is connected at another end to the pipe, optionally on a pressure side of the pump. In this way, the cleaning agent can be provided to the pipe instead of the liquid foodstuff to clean the tank in this way. If the system further comprises coupling pieces for connecting flexible pipes, a flexible cleaning pipe can optionally be connected thereto to supply the cleaning agent. Optionally, the cleaning pipe has a smaller diameter than the pipe.

In an embodiment, the system further comprises a control unit, which for example is adapted to control one or more components. The control of components can optionally relate to the opening or closing of valves; driving the circulation pump; and / or controlling the pressure in the pipe, the venting system, and / or the pressure system. For controlling the valves, each of the valves can be provided with an actuator, for example an electric, hydraulic or pneumatic actuator. In the case of a pneumatic actuator said actuator can for example be controlled with the inert gas that is also used for the venting system and / or the pressure system.

The controlling can, for example, be based on measurements with sensors. These measurements may optionally relate to process parameters, for example the pressure or flow rate, and / or to feedbacks that indicate whether a valve is in an open or closed position, and / or feedbacks that indicate whether a flexible pipe is connected to a coupling piece.

For example, the control unit may be adapted to control the pressure that the pressure system provides in the pipe connection based on the measurement of a pressure sensor that measures the pressure in the pipe, and / or a pressure sensor that measures the pressure in the pipe connection. For example, the control unit may be adapted to open or to close a valve through which air can be discharged from the first chamber depending on whether the first chamber must be vented or the pipe connection has to be pressurized. For example, the control unit can be adapted to only run the circulation pump if a flexible pipe is connected to the coupling pieces and / or if all valves in the pipe are open. For example, the control unit can be adapted to arrange the pipe connection valve in the open position only if the pipe connection is pressurized. For example, the control unit can be adapted to ensure that the pipe connection valve is closed when the first valve and / or the second valve is arranged in the open position. For example, the control unit can be adapted, for example with the aid of a level sensor in the additive receiving compartment, to indicate when a next batch of additives should be added in the additive receiving compartment and / or to only arrange the first valve in the open position if there are sufficient additives present in the additive receiving compartment. For example, the control unit can be adapted, for example with the aid of a level sensor in the pipe connection, to arrange the first valve in the open position if all or almost all of the additives that were present in the pipe connection have been inserted in the flowing liquid foodstuff. For example, the control unit can be adapted to control the circulation pump on the basis of measurements from a pressure sensor that measures the pressure in the pipe. The above possible functions of the control unit can be implemented in combination with each other as required or desired.

The automating of certain functions with the control unit is advantageous to obtain qualitative and reproducible results, which is particularly relevant in large systems where operators otherwise are required to have the required knowledge to obtain satisfactory results. Automation also prevents human errors. In the system according to the invention, in particular the switching of the first valve, the second valve and the pipe connection valve is important for proper operation.

In an embodiment the system is at least partially built up as a movable unit on a movable frame, wherein at least the tank is placed on the frame. Optionally, the circulation pump is placed on the frame. Optionally, the pipe is placed on the frame, wherein the pipe optionally comprises two coupling pieces adapted to connect a flexible pipe. Optionally, the venting system and / or the pressure system is placed on the frame, wherein the venting system and / or the pressure system optionally comprises a coupling piece adapted to connect a flexible pipe. Optionally a control box is arranged on the frame, which control box optionally comprises the control unit and / or electrical wiring, such that the control box can provide the components of the movable unit with current or power when the control box is supplied with energy, for example via the electricity grid or via a generator.

In an embodiment, the first valve and / or the second valve is a butterfly valve. A butterfly valve is advantageous because said butterfly valve, if for example placed horizontally, when transferring from the closed to the open position ensures that the additives fall into the first or second chamber with the aid of gravity. In addition, butterfly valves can seal the first or second chamber airtight, for example, so-called double or triple offset butterfly valves.

In an embodiment, the first valve and / or the second valve is airtight in the closed position.

In an embodiment, the first valve and / or the second valve can be operated manually.

In an embodiment the first valve and / or the second valve can be operated automatically, for example with an actuator, for example a pneumatic, electric or hydraulic actuator.

In an embodiment, the liquid foodstuff is a beverage, preferably beer.

In an embodiment, the additives are in a solid form, wherein the additives are preferably pellets, preferably hop pellets. However, it is also possible that the additives are powders or granulates. The additives can optionally also contain coffee, spices or dried fruits.

The invention further relates to a method. The method according to the invention can be carried out using the system according to the invention; however, the method according to the invention is not limited thereto. In addition, the various features and embodiments of the system according to the invention, as well as the use and applications thereof, can be added to the method, even if they are not explicitly described with respect to said method. Also features and components described with regard to methods can be added to the system according to the invention. Features, components and definitions used with regard to the method according to the invention have the same meaning as explained with respect to the system according to the invention, unless explicitly stated otherwise.

The object of the invention is achieved with a method for inserting additives in a flowing liquid foodstuff, comprising the following steps:
- arranging a first batch of additives in an additive receiving compartment,
- transferring the first batch of additives from the additive receiving compartment to a first chamber by arranging a first valve arranged between the additive receiving compartment and the first chamber in an open position,
- arranging the first valve in a closed position,
- venting the first chamber,
- inserting the first batch of additives in the flowing liquid foodstuff via a pipe connection,
- while the first batch is in the first chamber and / or the pipe connection, arranging a second batch of additives in the additive receiving compartment.

The invention thus provides a method wherein a second batch of additives can be arranged in the additive receiving compartment while a first batch is located in the first chamber and / or the pipe connection. This allows to add a plurality of batches of additives without stopping the process. It also makes it possible to add additives practically continuously.

In an embodiment of the method, the second batch of additives is arranged into the additive receiving compartment during the venting of the first chamber and / or the inserting the first batch of additives in the flowing liquid foodstuff.

In this embodiment, the second batch is provided while the process is actively running in the first chamber and / or the pipe connection.

In an embodiment, the method further comprises one or more of the following steps: pressurizing the pipe connection to a pressure greater than the pressure of the liquid foodstuff in the pipe when the first batch of additives is in the pipe connection; and / or pressurizing the pipe connection at a pressure between 0.1 and 4 barg, preferably between 1.0 and 2.0 barg, for example 1.5 barg, when the first batch of additives is in the pipe connection; and / or pressurizing the pipe connection at a pressure between 1.1 and 2.25 bar, for example 1.75 bar, when the first batch of additives is in the pipe connection; and / or supplying a gas to the pipe connection at a gas flow between 0.1 and 2 bar, preferably 0.2 bar greater than the pressure in the pipe in which the flowing liquid foodstuff is, when the first batch of additives is in the pipe connection.

In these embodiments, a pressure is provided in the pipe connection, preferably by supplying a gas, such that preferably the pressure in the pipe connection is greater than the pressure of the liquid foodstuff. This ensures, on the one hand, that the liquid foodstuff does not end up in the tank via the pipe connection and, for example, makes the additives wet, and on the other hand that the additives end up more easily in the liquid foodstuff.

In an embodiment, after venting the first chamber, the method comprises a step of transferring the first batch of additives from the first chamber to a second chamber by arranging a second valve arranged between the first chamber and the second chamber in an open position. The method further comprises a step of arranging the second valve into a closed position, and a step of, while the first batch of additives is in the second chamber and / or the pipe connection, transferring the second batch of additives from the additive receiving compartment to the first chamber.

In a further embodiment, the method further comprises: inserting the first batch of additives in the flowing liquid foodstuff while the second batch is in the first chamber; and / or venting the first chamber while the second batch of additives is in the first chamber and while the first batch of additives is in the second chamber and / or the pipe connection.

In a further embodiment, the method further comprises a step of arranging a third batch of additives in the additive receiving compartment while the second batch of additives is in the first chamber and the first batch of additives is in the second chamber or the pipe connection. In a further embodiment, the third batch of additives is added to the additive receiving compartment while the first chamber is being vented and / or the first batch of additives is being inserted in the liquid foodstuff via the pipe connection.

In this embodiments, a second chamber is provided in the tank, such that the first chamber can be vented without the process having to be stopped. For example, a batch of additives can be inserted in the liquid foodstuff via the pipe connection while a subsequent batch is already being vented in the first chamber. The continuity of inserting additives is thus further increased in this embodiment.

It is further envisaged that the system and method according to the invention can also be applied outside the food industry or within the food industry without the first chamber having to be vented. The invention therefore relates in a second aspect to a system for inserting additives in a flowing substance, comprising
- a tank comprising:
   I. an additive receiving compartment adapted to receive the additives,
   II. a first chamber that is optionally adapted to be vented by a venting system,
   III. a pipe connection, adapted to
      ▪ be connected to a pipe where the flowing substance is in, and
      ▪ to insert the additives in the flowing substance,
   IV. a first valve arranged between the additive receiving compartment and the first chamber, wherein the first valve
      ▪ has an open position wherein additives can be transferred from the additive receiving compartment to the first chamber, and
      ▪ has a closed position wherein additives can be received in the additive receiving compartment while the first chamber can be vented and / or additives can be inserted in the flowing substance via the pipe connection.

The invention in the second aspect also relates to a method for inserting additives in a flowing substance, wherein the method comprises the following steps:
- arranging a first batch of additives in an additive receiving compartment,
- transferring the first batch of additives from the additive receiving compartment to a first chamber by arranging a first valve arranged between the additive receiving compartment and the first chamber in an open position,
- arranging the first valve in a closed position,
- optionally venting the first chamber,
- inserting the first batch of additives in the flowing substance via a pipe connection,
- while the first batch is in the first chamber and / or the pipe connection, arranging a second batch of additives in the additive receiving compartment.

The additives may be liquids or substances in solid form, optionally pellets, powders or granules. The additives may be, for example, fruit, spices, powders, coffee, chocolate, vitamins, fuels, catalysts, etc.

The flowing substance may optionally be a flowing liquid or a flowing gas. The flowing substance can be, for example, a beverage, a dairy product, a petrochemical product such as an oil or gas, a chemical product, a paint, an adhesive, water, steam, etc.

It will be understood that all embodiments of the system and method according to the first aspect of the invention can also be applied to the system and method according to the second aspect of the invention.

The invention will now be described by way of example with reference to the figures below, wherein the same reference numerals in different figures indicate the same characteristics. It should be noted, however, that the figures are only an example wherein several optional features are combined. The invention is not limited to what is shown in the figures.

In the figures:
Fig. 1 shows a process flow diagram of a system according to the invention in a first embodiment;
Fig. 2a shows a side view of the system in the first embodiment;
Fig. 2b shows a perspective view of the system in the first embodiment;
Fig. 3a shows a side view of a system according to the invention in a second embodiment;
Fig. 3b shows a perspective view of the system in the second embodiment.

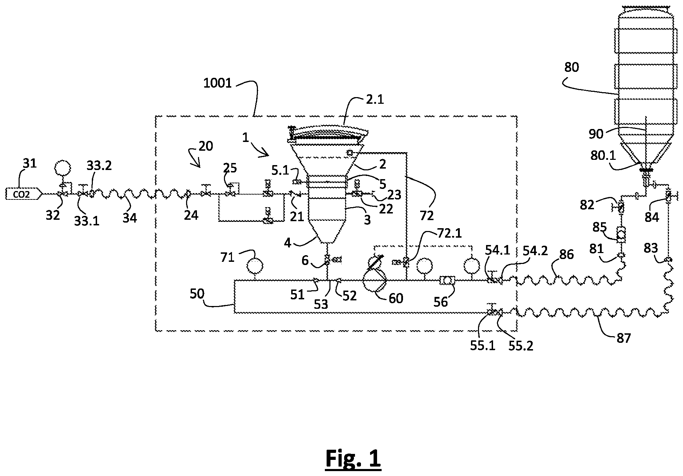

Fig. 1 shows a liquid foodstuff tank 80, which in this example is a fermentation tank in which beer is stored for a certain time, for example 5-7 days for a first fermentation and optionally 3-7 weeks for a second fermentation, to be subjected to a fermentation process. Various additives can be added during said process, such as hops or additives that affect the flavour. The invention provides a method and system that can be used for inserting additives in liquid foodstuff.

Fig. 1 shows a process flow diagram of a system according to the invention in a first embodiment. The system comprises a tank 1, which comprises an additive receiving compartment 2. Additives, in this example hop pellets, can be inserted in the additive receiving compartment 2. A lid 2.1 is provided to close the additive receiving compartment 2 if necessary, but said lid 2.1 can be opened while the system and the process are in use. A first valve 5 is provided below the additive receiving compartment 2, which first valve 5 has an open position and a closed position.

The first valve 5 connects the additive receiving compartment 2 to a first chamber 3, which in turn can be vented by a venting system 20. The venting system 20 is connected, as schematically shown in Fig. 1, to a gas supply 31 which comprises an inert gas, in this case CO₂. The gas supply 31 comes from a central gas distribution system that is present at the location where the beer is brewed. The inert gas can be inserted via valve 21 in the first chamber 3, and the oxygen-containing air can be expelled from the first chamber 3 via valve 22. The first chamber 3 contains nozzles for connecting these valves 21, 22. In practice, valve 21 is preferably connected to a lower part of the first chamber 3 and valve 22 is connected to an upper part of the first chamber 3.

The tank 1 further comprises a pipe connection 4 which, in the shown example, is part of the first chamber 3. The pipe connection 4 can be connected to a pipe 50, and in this example comprises a pipe connection valve 6. Via the pipe connection 4, additives can be inserted in a flowing liquid foodstuff contained in pipe 50, wherein flowing liquid foodstuff in this example is beer.

According to the invention, additives, for example a first batch of additives, can be transferred from the additive receiving compartment 2 to the first chamber 3, when the first valve 5 is in the open position. In addition, when the first valve 5 is in the closed position, additives, for example a second batch of additives, can be received in the additive receiving compartment 2 while the first chamber 3 can be vented and / or additives, for example the first batch of additives, can be inserted in the flowing liquid foodstuff via the pipe connection 4. The system according to the invention thus makes it possible to add additives practically continuously. A second batch of additives can be arranged in the additive receiving compartment 2 while the process continues.

Fig. 1 furthermore shows the pipe 50, which includes an optional reducer 51 and expander 52, so that pipe piece 53 has a smaller diameter than the rest of the pipe 50. Pipe piece 53 furthermore is a T-junction on which the pipe connection 4 of the tank 1 is connected, which in this example still comprises the pipe connection valve 6. The optional reducer 51 and expander 52 can improve the insertion of the additives in the liquid foodstuff using the Venturi effect. Because the diameter in pipe section 53 is reduced relative to the rest of the pipe 50, the speed of the liquid foodstuff in pipe section 53 increases. It follows from Bernouilli's law that the pressure in pipe section 53 is thereby reduced. This creates a suction effect on the additives that are located in the pipe connection 4, which in this way end up in the pipe piece 53 more easily. The diameter of pipe 50 can optionally be 80 mm and the diameter of pipe piece 53 can optionally be 50 mm.

In the shown example, the venting system 20 is adapted to supply CO₂. Valve 21 connects the first chamber with the venting system 20, which further comprises a coupling piece 24. Coupling piece 24 is adapted for coupling to a flexible pipe 34, which in turn can be connected at another end to a coupling piece 33.2 which via valve 33.1 and pressure regulator 32 is connected to a schematically shown gas supply 31. When CO₂ is added to the first chamber 3 with the venting system 20, the oxygen-containing air can be expelled from the first chamber 3 via valve 22. A coupling piece 23 is further provided here for possibly diverting the expelled air to somewhere else. The diameters of the pipes in the venting system can optionally be 15 or 25 mm.

In the shown example, the venting system 20 also functions as a pressure system 20. The pressure system 20 is adapted to pressurize the pipe connection 4 to a pressure greater than the pressure of the liquid foodstuff in the pipe 50. This makes it easier for the additives to be transferred from the pipe connection 4 to the liquid foodstuff in the pipe 50.

For example, after venting, valve 22 can be closed such that the pressure in the first chamber 3, and the pipe connection 4, is increased when CO₂ is supplied via valve 21.

The pipe 50 may further comprise a pressure sensor 71 which measures the pressure in the pipe 50. Based on said pressure measurement, the pressure in the pipe connection 4 can then be set, for example with the aid of pressure controller 25. This can optionally be done by an operator who reads said pressure on pressure sensor 71, or via an automated system, for example with a control unit such as will be explained later. It is also possible to arrange the pressure sensor 71 on pipe piece 53.

In the shown example, the system further comprises a circulation pump 60 which is arranged in the pipe 50, which pumps the liquid foodstuff back towards the liquid foodstuff tank 80. In this example, the circulation pump 60 is a centrifugal pump. In some applications, for example if the additives are pellets, the circulation pump 60 is preferably a type of pump that does not crush the additives. This makes it easier to optionally later, for example after 4-24 hours, filter the hop pellets out of the beer, with known techniques such as decantation, separation, or other filtering techniques.

The pipe connection 4 of the tank 1 is connected to the pipe 50 on the suction side of the pump 60. Since the pressure on the suction side is smaller, this promotes the incorporation of additives in the liquid foodstuff.

On the pressure side of the pump 60 a cleaning pipe 72 is provided. The cleaning pipe 72 is connected at another end to the additive receiving compartment 2 via a spray nozzle (not shown), and is furthermore provided with a valve 72.1. A cleaning agent can be inserted in the additive receiving compartment 2 via the cleaning pipe 72. In this way the tank 1 can be cleaned. The cleaning agent can be supplied by connecting flexible cleaning pipes to the coupling pieces 54.2, 55.2. The pipe 50 can also be cleaned in this way.

As schematically shown in Fig. 1, the liquid foodstuff tank 80 is larger than the tank 1. The liquid foodstuff tank 80 can optionally have a diameter of 3 m and a height of 10 m, while the first chamber 3 of the tank 1 has a diameter of 200 mm and a height of 300 mm, while the tank 1 has a height of 1000 mm from the lid 2.1 to a bottom of the pipe connection 4.

In the shown example, the liquid foodstuff tank 80 comprises a mixing device 90, which may be, for example, a rotary mixer, e.g. a rotary jet mixer. This ensures that the liquid foodstuff in the liquid foodstuff tank 80 moves, which may facilitate the transfer of aromas, for example from hop pellets, for example in beer. In general, the additives are not crushed by the mixing device 90.

In a non-shown embodiment, it is possible that the liquid foodstuff tank 80 is connected to the tank 1 via fixed pipes. For example, the pipe 50 can be directly connected to the liquid foodstuff tank 80. It is also possible that the pipe 50 is connected to a manifold to which also a plurality of liquid foodstuff tanks are connected. The manifold can optionally comprise a plurality of valves such that each of the liquid foodstuff tanks can be connected to the tank 1, such that additives can be added to the liquid foodstuff of the respective liquid foodstuff tank.

In the shown example another solution is provided. Here, at a bottom 80.1 of the liquid foodstuff tank 80, two pipe branches are provided which go via valves 82, 84 to a coupling piece 81, 83, adapted to connect flexible pipes 86, 87 to. It is advantageous to connect said flexible pipes 86, 87 to the bottom 80.1 of the liquid foodstuff tank 80 so that the liquid foodstuff can be transported by gravity at least up to the circulation pump 60. It may also be advantageous to re-introduce the liquid foodstuff together with the additives at the bottom 80.1 in the liquid foodstuff tank 80, because this benefits mixing and thus, for example, the transfer of aromas. Through an optional sight glass 85, an operator can check whether the liquid foodstuff is flowing.

The pipe 50 also comprises two coupling pieces 54.2 and 55.2, with an associated valve 54.1 and 55.1, respectively, and through an optional sight glass 56 an operator can check whether the liquid foodstuff is flowing. The coupling pieces 54.2, 55.2 are each adapted to connect another end of flexible pipes 86, 87 to. In this way, the liquid foodstuff tank 80 is connected to the tank 1 in a flexible manner. The components located within rectangle 1001 in Fig. 1 can optionally be connected to another liquid foodstuff tank by connecting the flexible pipes 86, 87 to coupling pieces associated with said liquid foodstuff tank.

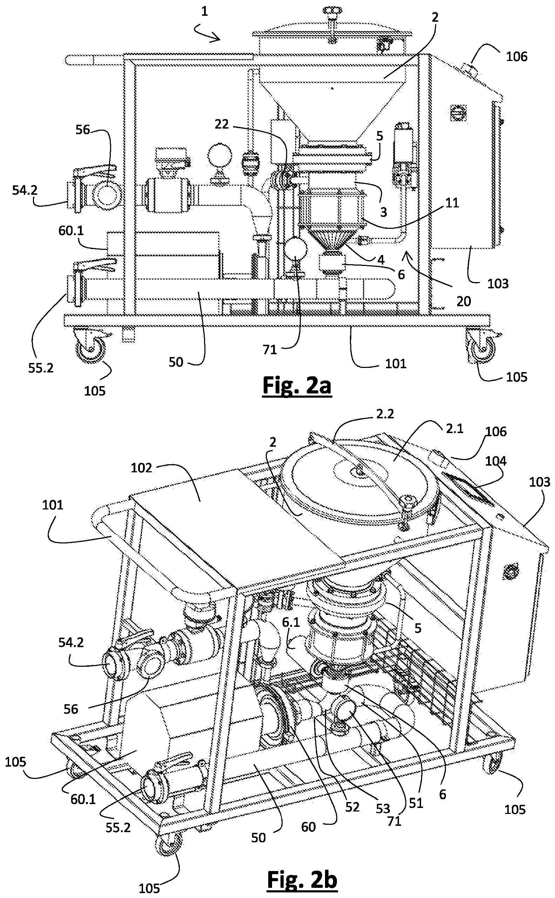

Since in the shown example also the venting system 20 is connected to the gas supply 31 via a flexible pipe 34, all components within rectangle 1001 can be moved independently. They can optionally be built as a movable unit, as shown in Figs. 2a-2b.

Fig. 2a shows a side view of the system in the first embodiment, and Fig. 2b shows a perspective view of the system in the first embodiment. In these figures, the tank 1, the additive receiving compartment 2, the first valve 5, the first chamber 3, the pipe connection 4 and the pipe connection valve 6 are clearly visible. As can be seen, the lid 2.1 of the additive receiving compartment contains a handle 2.2 to open the lid 2.1, which can happen to add a next batch of additives without stopping the process if the first valve 5 is in the closed position. The lid 2.1 is arranged approximately at breast height, for example approximately 1500 mm from ground level, so that an operator can easily add additives. Venting system 20 is connected to the first chamber 3 and also functions as pressure system 20.

Further visible in these figures are the pipe 50 with the reducer 51, the expander 53 and the pipe section 53 therein between which visibly has a smaller diameter than the rest of the pipe 50, and to which the pipe connection 4 is connected. The pipe 50 comprises the coupling pieces 54.2, 55.2, and a sight glass 56 is provided so that an operator can observe whether the liquid foodstuff is flowing through the pipe 50. Pump 60 further comprises a pump housing 60.1 wherein the drive of the pump is located.

Fig. 2a also shows a transparent cylinder 11, which for example can contain glass such that an operator can see through it. The transparent cylinder 11 is arranged in this example as part of the first chamber 3, between the first valve 5 and the pipe connection 4. This makes it possible to visually observe whether the insertion of the additives proceeds smoothly and whether any parameters should be adjusted.

Fig. 2a furthermore also shows an actuator 6.1 of the pipe connection valve 6. The first valve 5 is also driven by an actuator, as is valve 22.

The components shown in Figs. 2a-2b are constructed as a movable unit on a movable frame 101. In this example, the frame 101 comprises four wheels 105, so that it can easily be moved, for example to another liquid foodstuff tank via the coupling pieces 54.2, 55.2.

The frame 101 further comprises a plate 102. This can optionally be used to arrange a next batch of additives on before the lid 2.1 is opened.

Fig. 2a-2b furthermore show a control box 103 which is attached to the frame 101. The control box 103 comprises, for example, electrical wiring, so that the control box 103 can supply the components of the movable unit with current or power when the control box 103 is supplied with energy, for example via the electricity grid or via a generator.

The control box 103 in this example further comprises a control unit, which may for example comprise one or more processors, for example comprising one or more programmable logic controllers (PLC). A screen 104 is provided to for example provide an operator with information, for example concerning control parameters or sensor values. An input module 106 allows an operator to interact with the control unit, for example to adjust control parameters and / or display other information on the screen 104.

The control unit is adapted to control one or more components. The control of components can optionally relate to the opening or closing of valves, driving the circulation pump 60 and / or controlling the pressure in the pipe 50, the venting system 20 and / or the pressure system 20. For controlling the valves, each of the valves can be provided with an actuator, for example a pneumatic actuator, which is for example controlled with the inert gas which is also used for the venting system 20 and / or the pressure system 20.

The controlling can be done based on measurements with sensors. These measurements may optionally relate to process parameters, for example the pressure or flow rate, and / or to feedbacks that indicate whether a valve is in an open or closed position, and / or feedbacks that indicate whether a flexible pipe is connected to a coupling piece 54.2, 55.2.

In the shown example, the control unit is adapted to control the opening and closing of the first valve 5 and the pipe connection valve 6, such that the first valve 5 can only be arranged in the open position when the pipe connection valve is closed. The control unit is also adapted to open or close valve 22 depending on whether the first chamber 3 must be vented or the pipe connection 4 must be pressurized. Furthermore, the control unit is adapted to control the pressure of the inert gas supplied by the venting system 20 and the pressure system 20 based on measurements from sensor 71. The control unit is further adapted to, with the aid of a level sensor (not shown) in the additive receiving compartment 2, indicated when a next batch of additives is to be added in the additive receiving compartment 2 and only to arrange the first valve 5 in the open position if sufficient additives are present in the additive receiving compartment 2. The control unit is also adapted, with the aid of a level sensor (not shown) in the pipe connection 4, to arrange the first valve 5 in the open position if all or almost all additives present in the pipe connection 4 are inserted in the flowing liquid foodstuff.

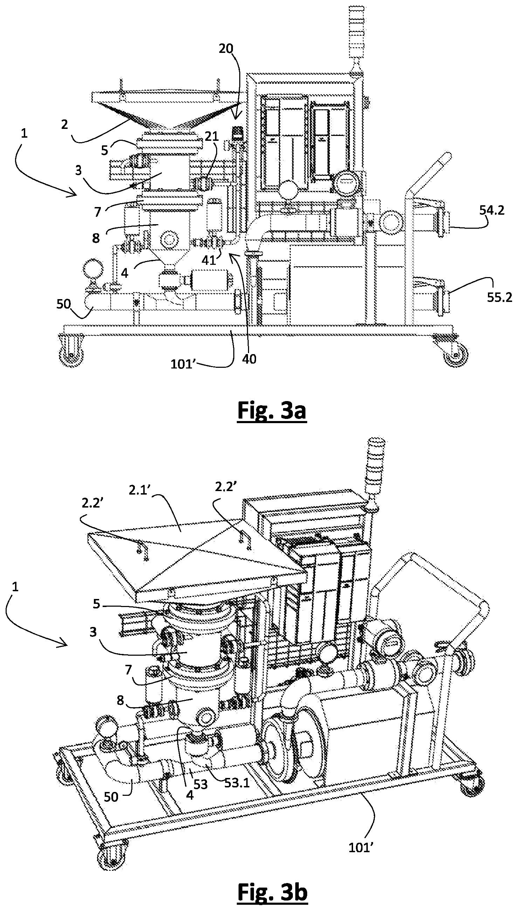

Fig. 3a and 3b show a second embodiment of the system according to the invention, in a side view and perspective view, respectively. The components shown in these figures are again constructed as a movable unit on a frame 101'. Via coupling pieces 54.2, 55.2, the pipe 50 can be connected to flexible pipes and in this way to a liquid foodstuff tank.

A difference with respect to the embodiment shown in Figs. 1-2b, is that the tank 1 in Figs. 3a-3b comprises a second chamber 8 and a second valve 7. In this example, the second chamber 8 is located below the first chamber 3, and the second valve 7 is arranged between the first chamber 3 and the second chamber 8. Furthermore, the second chamber 8 in this example comprises the pipe connection 4.

As can best be seen in Fig. 3a, the venting system 20 is connected via valve 21 to the first chamber 3. The first chamber 3 can be vented in this way. In the shown example, a pressure system 40 is branched from the venting system 20 and connected to the second chamber 8 via valve 41. In this way the pipe connection 4, which is located in the second chamber 8, can be pressurized.

This embodiment thus provides an additional, second chamber 8 in the tank 1. This allows venting the first chamber 3 while a batch of additives is present there, while at the same time another batch of additives is present in the second chamber 8. The continuity of inserting is therefore further increased.

In Fig. 3b it is further visible that the T-junction in pipe section 53 comprises a curved branch 53.1 to which the pipe connection 4 is connected. This facilitates the insertion of additives in the liquid foodstuff. The first embodiment shown in Figs. 2a-2b can also be provided with a curved branch 53.1.

The frame 101' on which the system in Figs. 3a and 3b is mounted, is more open than the frame used in the first embodiment. This makes the components easier to access. Furthermore, Fig. 3b shows another embodiment of a lid 2.1' with two handles 2.2'. The frame 101' and the lid 2.1' can also be used with the first embodiment of the system, and conversely, the frame and lid shown with said first embodiment can also be used with the second embodiment of the system.

As required, this document describes detailed embodiments of the present invention. However it must be understood that the disclosed embodiments serve exclusively as examples, and that the invention may also be implemented in other forms. Therefore specific constructional aspects which are disclosed herein should not be regarded as restrictive for the invention, but merely as a basis for the claims and as a basis for rendering the invention implementable by the average skilled person.

Furthermore, the various terms used in the description should not be interpreted as restrictive but rather as a comprehensive explanation of the invention.

The word "a" used herein means one or more than one, unless specified otherwise. The phrase "a plurality of' means two or more than two. The words "comprising" and "having" are constitute open language and do not exclude the presence of more elements.

Reference figures in the claims should not be interpreted as restrictive of the invention. Particular embodiments need not achieve all objects described.

The mere fact that certain technical measures are specified in different dependent claims still allows the possibility that a combination of these technical measures may advantageously be applied.

## Claims

1. System for inserting additives in a flowing liquid foodstuff, comprising
• a tank (1) comprising:
i. an additive receiving compartment (2) adapted to receive additives,
ii. a first chamber (3) adapted to be vented by a venting system (20),
iii. a pipe connection (4), adapted to
• be connected to a pipe (50) where the flowing liquid foodstuff is in, and
• insert the additives in the flowing liquid foodstuff,
iv. a first valve (5) arranged between the additive receiving compartment (2) and the first chamber (3), wherein the first valve (5)
• has an open position wherein additives can be transferred from the additive receiving compartment (2) to the first chamber (3), and
• has a closed position wherein additives can be received in the additive receiving compartment (2) while the first chamber (3) can be vented and / or additives can be inserted in the flowing liquid foodstuff via the pipe connection (4).

2. System of claim 1, further comprising a pressure system (20) adapted to
• pressurize the pipe connection (4) at a pressure that is greater than the pressure of the liquid foodstuff in the pipe (50), and / or
• pressurize the pipe connection (4) at a pressure between 0.1 and 4 barg, preferably between 1.0 and 2.0 barg, for example 1.5 barg, and / or
• supply a gas to the pipe connection (4) at a gas flow between 0.1 and 2 bar, preferably 0.2 bar greater than the pressure in the pipe (50) in which the flowing liquid foodstuff is,
wherein optionally the pressure system (20) and the venting system (20) are the same.

3. System according one or more of the preceding claims, wherein the open position of the first valve (5) is such that the additives are transferred from the additive receiving compartment (2) to the first chamber (3) with the aid of gravity, and/or wherein the first chamber (3) comprises the pipe connection (4).

4. System according to one or more of the preceding claims, wherein the tank (1) further comprises a second chamber (8) and a second valve (7) arranged between the first chamber (3) and the second chamber (8), wherein the second valve (7)
• has an open position wherein additives can be transferred from the first chamber (3) to the second chamber (8), and
• has a closed position wherein the first chamber (3) can be vented while additives can be inserted in the flowing liquid foodstuff via the pipe connection (4),
wherein optionally the second chamber (8) comprises the pipe connection (4),
wherein optionally the open position of the second valve (7) is such that the additives are transferred from the first chamber (3) to the second chamber (8) with the aid of gravity, and/or
wherein the system is adapted to insert the additives from the pipe connection (4) in the pipe (50) with the aid of gravity.

5. System according to one or more of the preceding claims, wherein the pipe connection (4) is funnel-shaped and / or comprises a reducer (51),
wherein optionally an end diameter of the pipe connection (4) is smaller than the diameter of the first chamber (3) and / or the second chamber (8), and is preferably smaller than the diameter of the pipe (50), and / or
wherein the additive receiving compartment (2) is funnel-shaped and / or
wherein the additive receiving compartment (2)
• comprises an open top, or
• comprises a lid (2.1, 2.1') to close the additive receiving compartment (2), which is further adapted to be opened while the first chamber (3) is being vented and / or additives are being inserted via the pipe connection (4) in the flowing liquid foodstuff.

6. System according to one or more of the preceding claims, wherein the venting system (20) and / or the pressure system (20) is adapted to be connected to a gas supply (31) for an inert gas, wherein the gas supply (31) is connected to the tank (1) via a gas pipe, wherein the gas pipe preferably has a diameter has between 6 and 25 mm and / or wherein the pipe connection (4) comprises a pipe connection valve (6).

7. System according to one or more of the preceding claims, further comprising the pipe (50).

8. System according to claim 7, wherein the pipe (50) comprises a reducer (51) and an expander (52), with a pipe section (53) therein between of which the diameter is smaller than the diameter of the rest of the pipe (50), wherein the pipe section (53) is adapted to be connected to the pipe connection (4) of the tank (1).

9. System according to one or more of the preceding claims, further comprising a circulation pump (60) adapted to cause the liquid foodstuff to flow through the pipe (50),
wherein optionally the pipe connection (4) of the tank (1) is connected to the pipe (50) on a suction side of the circulation pump (60),
wherein optionally the circulation pump (60) is a centrifugal pump,
wherein optionally the system further comprises a liquid foodstuff tank (80), a pressure side of the circulation pump (60) being connected to the liquid foodstuff tank (80),
wherein optionally the circulation pump (60) is connected to a lower part of the liquid foodstuff tank (80).

10. System according to claim 9, wherein a suction side of the circulation pump (60) is connected to the liquid foodstuff tank (80), preferably to the lower part of the liquid foodstuff tank (80).

11. Method for inserting additives in a flowing liquid foodstuff, comprising the following steps:
• arranging a first batch of additives in an additive receiving compartment (2),
• transferring the first batch of additives from the additive receiving compartment (2) to a first chamber (3) by arranging a first valve (5) arranged between the additive receiving compartment (2) and the first chamber (3) in an open position,
• arranging the first valve (5) in a closed position,
• venting the first chamber (3),
• inserting the first batch of additives in the flowing liquid foodstuff via a pipe connection (4),
• while the first batch is in the first chamber (3) and / or the pipe connection (4), arranging a second batch of additives in the additive receiving compartment (2).

12. Method according to claim 11, wherein the second batch of additives is arranged in the additive receiving compartment (2) during the venting of the first chamber (3) and / or the inserting the first batch of additives in the flowing liquid foodstuff.

13. Method according to claim 11 or claim 12, further comprising one or more of the following steps:
• pressurizing the pipe connection (4) to a pressure greater than the pressure of the liquid foodstuff in the pipe (50) when the first batch of additives is in the pipe connection (4), and / or
• pressurizing the pipe connection (4) at a pressure between 0.1 and 4 barg, preferably between 1.0 and 2.0 barg, for example 1.5 barg, when the first batch of additives is in the pipe connection (4), and / or
• supplying a gas to the pipe connection (4) at a gas flow between 0.1 and 2 bar, preferably 0.2 bar greater than the pressure in the pipe (50) in which the flowing liquid foodstuff is, when the first batch of additives is in the pipe connection (4).

14. Method according to one or more of claims 11-13, further comprising the following steps after the venting of the first chamber (3):
• transferring the first batch of additives from the first chamber (3) to a second chamber (8) by arranging a second valve (7) arranged between the first chamber (3) and the second chamber (8) in an open position,
• arranging the second valve (7) into a closed position,
• while the first batch of additives is in the second chamber (8) and / or the pipe connection (4), transferring the second batch of additives from the additive receiving compartment (2) to the first chamber (3).

15. Method according to claim 14, wherein the method further comprises:
• inserting the first batch of additives in the flowing liquid foodstuff while the second batch is in the first chamber (3),
and / or
• venting the first chamber (3) while the second batch of additives is in the first chamber (3) and while the first batch of additives is in the second chamber (8) and / or the pipe connection (4).

## Patentansprüche

1. System zum Einbringen von Zusatzstoffen in ein fließendes flüssiges Lebensmittel, umfassend
• einen Tank (1), umfassend:
i. ein Zusatzstoff annehmendes Fach (2), das eingerichtet ist, um Zusatzstoffe aufzunehmen,
ii. eine erste Kammer (3), die eingerichtet ist, um von einem Entlüftungssystem (20) entlüftet zu werden,
iii. eine Rohrverbindung (4), die eingerichtet ist, um
• mit einem Rohr (50) verbunden zu werden, in dem sich das fließende flüssige Lebensmittel befindet, und
• die Zusatzstoffe in das fließende flüssige Lebensmittel einzubringen,
iv. ein erstes Ventil (5), das zwischen dem Zusatzstoff annehmenden Fach (2) und der ersten Kammer (3) angeordnet ist, wobei das erste Ventil (5)
• eine offene Position aufweist, in der Zusatzstoffe aus dem Zusatzstoff annehmenden Fach (2) in die erste Kammer (3) überführt werden können, und
• eine geschlossene Position aufweist, in der Zusatzstoffe in dem Zusatzstoff annehmenden Fach (2) angenommen werden können, während die erste Kammer (3) entlüftet werden kann und/oder Zusatzstoffe über die Rohrverbindung (4) in das fließende flüssige Lebensmittel eingebracht werden können.

2. System nach Anspruch 1, des Weiteren umfassend ein Drucksystem (20), das eingerichtet ist zum
• Druckbeaufschlagen der Rohrverbindung (4) auf einen Druck, der größer als der Druck des flüssigen Lebensmittels in dem Rohr (50) ist, und/oder
• Druckbeaufschlagen der Rohrverbindung (4) auf einen Druck zwischen 0,1 und 4 bar Manometerdruck, vorzugsweise zwischen 1,0 und 2,0 bar Manometerdruck, beispielsweise 1,5 bar Manometerdruck, und/oder
• Zuführen eines Gases zu der Rohrverbindung (4) mit einem Gasfluss zwischen 0,1 und 2 bar, vorzugsweise 0,2 bar über dem Druck in dem Rohr (50), in dem sich das fließende flüssige Lebensmittel befindet,
wobei gegebenenfalls das Drucksystem (20) und das Entlüftungssystem (20) das gleiche sind.

3. System nach einem oder mehreren der vorhergehenden Ansprüche, wobei die offene Position des ersten Ventils (5) derart ist, dass die Zusatzstoffe von dem Zusatzstoff annehmenden Fach (2) mithilfe der Schwerkraft in die erste Kammer (3) überführt werden, und/oder wobei die erste Kammer (3) die Rohrverbindung (4) umfasst.

4. System nach einem oder mehreren der vorhergehenden Ansprüche, wobei der Tank (1) des Weiteren eine zweite Kammer (8) und ein zweites Ventil (7) umfasst, das zwischen der ersten Kammer (3) und der zweiten Kammer (8) angeordnet ist, wobei das zweite Ventil (7)
• eine offene Position aufweist, in der Zusatzstoffe aus der ersten Kammer (3) in die zweite Kammer (8) überführt werden können, und
• eine geschlossene Position aufweist, in der die erste Kammer (3) entlüftet werden kann, während Zusatzstoffe über die Rohrverbindung (4) in das fließende flüssige Lebensmittel eingebracht werden können,
wobei die zweite Kammer (8) gegebenenfalls die Rohrverbindung (4) umfasst,
wobei gegebenenfalls die offene Position des zweiten Ventils (7) derart ist, dass die Zusatzstoffe aus der ersten Kammer (3) mithilfe der Schwerkraft in die zweite Kammer (8) überführt werden, und/oder
wobei das System eingerichtet ist, um die Zusatzstoffe aus der Rohrverbindung (4) mithilfe der Schwerkraft in das Rohr (50) einzubringen.

5. System nach einem oder mehreren der vorhergehenden Ansprüche, wobei die Rohrverbindung (4) trichterförmig ist und/oder ein Reduzierstück (51) umfasst,
wobei ein Enddurchmesser der Rohrverbindung (4) gegebenenfalls kleiner als der Durchmesser der ersten Kammer (3) und/oder der zweiten Kammer (8) ist und vorzugsweise kleiner als der Durchmesser des Rohrs (50) ist, und/oder
wobei das Zusatzstoff annehmende Fach (2) trichterförmig ist, und/oder
wobei das Zusatzstoff annehmende Fach (2)
• oben offen ist oder
• einen Deckel (2.1, 2.1') umfasst, um das Zusatzstoff annehmende Fach (2) zu schließen, das des Weiteren eingerichtet ist, um geöffnet zu werden, während die erste Kammer (3) entlüftet wird und/oder Zusatzstoffe über die Rohrverbindung (4) in das fließende flüssige Lebensmittel eingebracht werden.

6. System nach einem oder mehreren der vorhergehenden Ansprüche, wobei das Entlüftungssystem (20) und/oder das Drucksystem (20) eingerichtet ist bzw. sind, um mit einer Gaszufuhr (31) für ein Inertgas verbunden zu werden, wobei die Gaszufuhr (31) über ein Gasrohr mit dem Tank (1) verbunden ist, wobei das Gasrohr vorzugsweise einen Durchmesser zwischen 6 und 25 mm aufweist und/oder wobei die Rohrverbindung (4) ein Rohrverbindungsventil (6) umfasst.

7. System nach einem oder mehreren der vorhergehenden Ansprüche, des Weiteren umfassend das Rohr (50).

8. System nach Anspruch 7, wobei das Rohr (50) ein Reduzierstück (51) und einen Aufweiter (52) umfasst, wobei sich dazwischen ein Rohrsegment (53) befindet, dessen Durchmesser kleiner als der Durchmesser des Restes des Rohrs (50) ist, wobei das Rohrsegment (53) eingerichtet ist, um mit der Rohrverbindung (4) des Tanks (1) verbunden zu werden.

9. System nach einem oder mehreren der vorhergehenden Ansprüche, des Weiteren umfassend eine Umwälzpumpe (60), die eingerichtet ist, um zu bewirken, dass das flüssige Lebensmittel durch das Rohr (50) fließt,
wobei die Rohrverbindung (4) des Tanks (1) gegebenenfalls mit dem Rohr (50) an der Saugseite der Umwälzpumpe (60) verbunden ist,
wobei die Umwälzpumpe (60) gegebenenfalls eine Zentrifugalpumpe ist,
wobei das System gegebenenfalls des Weiteren einen Tank für flüssiges Lebensmittel (80) umfasst, wobei eine Druckseite der Umwälzpumpe (60) mit dem Tank für flüssiges Lebensmittel (80) verbunden ist,
wobei die Umwälzpumpe (60) gegebenenfalls mit einem unteren Teil des Tanks für flüssiges Lebensmittel (80) verbunden ist.

10. System nach Anspruch 9, wobei eine Saugseite der Umwälzpumpe (60) mit dem Tank für flüssiges Lebensmittel (80) verbunden ist, vorzugsweise mit dem unteren Teil des Tanks für flüssiges Lebensmittel (80).

11. Verfahren zum Einbringen von Zusatzstoffen in ein fließendes flüssiges Lebensmittel, umfassend die folgenden Schritte:
• Anordnen einer ersten Charge von Zusatzstoffen in einem Zusatzstoff annehmenden Fach (2),
• Überführen der ersten Charge von Zusatzstoffen aus dem Zusatzstoff annehmenden Fach (2) in eine erste Kammer (3), indem ein erstes Ventil (5), das zwischen dem Zusatzstoff annehmenden Fach (2) und der ersten Kammer (3) angeordnet ist, in einer offenen Position angeordnet wird,
• Anordnen des ersten Ventils (5) in einer geschlossenen Position,
• Entlüften der ersten Kammer (3),
• Einbringen der ersten Charge von Zusatzstoffen in das fließende flüssige Lebensmittel über eine Rohrverbindung (4),
• Anordnen einer zweiten Charge von Zusatzstoffen in dem Zusatzstoff annehmenden Fach (2), während sich die erste Charge in der ersten Kammer (3) und/oder der Rohrverbindung (4) befindet.

12. Verfahren nach Anspruch 11, wobei die zweite Charge von Zusatzstoffen während des Entlüftens der ersten Kammer (3) und/oder des Einbringens der ersten Charge von Zusatzstoffen in das fließende flüssige Lebensmittel in dem Zusatzstoff annehmenden Fach (2) angeordnet wird.

13. Verfahren nach Anspruch 11 oder Anspruch 12, des Weiteren umfassend einen oder mehrere der folgenden Schritte:
• Druckbeaufschlagen der Rohrverbindung (4) auf einen Druck, der größer als der Druck des flüssigen Lebensmittels in dem Rohr (50) ist, wenn die erste Charge von Zusatzstoffen sich in der Rohrverbindung (4) befindet, und/oder
• Druckbeaufschlagen der Rohrverbindung (4) auf einen Druck zwischen 0,1 und 4 bar Manometerdruck, vorzugsweise zwischen 1,0 und 2,0 bar Manometerdruck, beispielsweise 1,5 bar Manometerdruck, wenn sich die erste Charge der Zusatzstoffe in der Rohrverbindung (4) befindet, und/oder
• Zuführen eines Gases zu der Rohrverbindung (4) mit einem Gasfluss zwischen 0,1 und 2 bar, vorzugsweise 0,2 bar über dem Druck in dem Rohr (50), in dem sich das fließende flüssige Lebensmittel befindet, wenn die erste Charge von Zusatzstoffen sich in der Rohrverbindung (4) befindet.

14. Verfahren nach einem oder mehreren der Ansprüche 11 bis 13, des Weiteren umfassend die folgenden Schritte nach dem Entlüften der ersten Kammer (3):
• Überführen der ersten Charge von Zusatzstoffen aus der ersten Kammer (3) in eine zweite Kammer (8), indem ein zweites Ventil (7), das zwischen der ersten Kammer (3) und der zweiten Kammer (8) angeordnet ist, in einer offenen Position angeordnet wird,
• Anordnen des zweiten Ventils (7) in einer geschlossenen Position,
• Überführen der zweiten Charge von Zusatzstoffen aus dem Zusatzstoff annehmenden Fach (2) in die erste Kammer (3), während sich die erste Charge der Zusatzstoffe in der zweiten Kammer (8) und/oder der Rohrverbindung (4) befindet.

15. Verfahren nach Anspruch 14, wobei das Verfahren des Weiteren umfasst:
• Einbringen der ersten Charge von Zusatzstoffen in das fließende flüssige Lebensmittel, während sich die zweite Charge in der ersten Kammer (3) befindet, und/oder
• Entlüften der ersten Kammer (3), während sich die zweite Charge von Zusatzstoffen in der ersten Kammer (3) befindet und während sich die erste Charge von Zusatzstoffen in der zweiten Kammer (8) und/oder der Rohrverbindung (4) befindet.

## Revendications

1. Système d'adjonction d'additifs dans un produit alimentaire liquide en écoulement, comprenant
• un réservoir (1) comprenant :
i. un compartiment de réception d'additifs (2) conçu pour recevoir des additifs,
ii. une première chambre (3) conçue pour être ventilée par un système de ventilation (20),
iii. un raccord de tuyau (4), conçu pour
• être raccordé à un tuyau (50) où se trouve le produit alimentaire liquide en écoulement, et
• adjoindre les additifs dans le produit alimentaire liquide en écoulement,
iv. une première soupape (5) agencée entre le compartiment de réception d'additifs (2) et la première chambre (3), la première soupape (5)
• ayant une position ouverte où des additifs peuvent être transférés du compartiment de réception d'additifs (2) à la première chambre (3), et
• ayant une position fermée où des additifs peuvent être reçus dans le compartiment de réception d'additifs (2) tandis que la première chambre (3) peut être ventilée et/ou que des additifs peuvent être adjoints dans le produit alimentaire liquide en écoulement via le raccord de tuyau (4) .

2. Système selon la revendication 1, comprenant en outre un système de pression (20) conçu pour
• mettre sous pression le raccord de tuyau (4) à une pression qui est supérieure à la pression du produit alimentaire liquide en écoulement dans le tuyau (50), et/ou
• mettre sous pression le raccord de tuyau (4) à une pression comprise entre 0,1 et 4 barg, préférablement comprise entre 1,0 et 2,0 barg, par exemple 1,5 barg, et/ou
• alimenter en gaz le raccord de tuyau (4) à un écoulement de gaz compris entre 0,1 et 2 bars, préférablement 0,2 bar supérieur à la pression dans le tuyau (50) dans lequel se trouve le produit alimentaire liquide en écoulement,
le système de pression (20) et le système de ventilation (20) étant facultativement le même.

3. Système selon une ou plusieurs des revendications précédentes, où la position ouverte de la première soupape (5) est telle que les additifs sont transférés du compartiment de réception d'additifs (2) à la première chambre (3) avec l'aide de la gravité, et/ou la première chambre (3) comprenant le raccord de tuyau (4) .

4. Système selon une ou plusieurs des revendications précédentes, où le réservoir (1) comprend en outre une deuxième chambre (8) et une deuxième soupape (7) agencée entre la première chambre (3) et la deuxième chambre (8), la deuxième soupape (7)
• ayant une position ouverte où des additifs peuvent être transférés de la première chambre (3) à la deuxième chambre (8), et
• ayant une position fermée où la première chambre (3) peut être ventilée tandis que des additifs peuvent être adjoints dans le produit alimentaire liquide en écoulement via le raccord de tuyau (4),
la deuxième chambre (8) comprenant facultativement le raccord de tuyau (4),
où facultativement la position ouverte de la deuxième soupape (7) est telle que les additifs sont transférés de la première chambre (3) à la deuxième chambre (8) avec l'aide de la gravité, et/ou
le système étant conçu pour adjoindre les additifs à partir du raccord de tuyau (4) dans le tuyau (50) avec l'aide de la gravité.

5. Système selon une ou plusieurs des revendications précédentes, où le raccord de tuyau (4) est en forme d'entonnoir et/ou comprend un réducteur (51),
où facultativement un diamètre d'extrémité du raccord de tuyau (4) est inférieur au diamètre de la première chambre (3) et/ou de la deuxième chambre (8), et est préférablement inférieur au diamètre du tuyau (50), et/ou
où le compartiment de réception d'additifs (2) est en forme d'entonnoir et/ou
le compartiment de réception d'additifs (2)
• comprenant un dessus ouvert, ou
• comprenant un couvercle (2.1, 2.1') pour fermer le compartiment de réception d'additifs (2), qui est en outre conçu pour être ouvert tandis que la première chambre (3) est ventilée et/ou que des additifs sont adjoints via le raccord de tuyau (4) dans le produit alimentaire liquide en écoulement.

6. Système selon une ou plusieurs des revendications précédentes, où le système de ventilation (20) et/ou le système de pression (20) est conçu pour être raccordé à une alimentation en gaz (31) pour un gaz inerte, l'alimentation en gaz (31) étant raccordée au réservoir (1) via un tuyau de gaz, le tuyau de gaz ayant préférablement un diamètre compris entre 6 et 25 mm et/ou le raccord de tuyau (4) comprenant une soupape de raccord de tuyau (6).

7. Système selon une ou plusieurs des revendications précédentes, comprenant en outre le tuyau (50).

8. Système selon la revendication 7, où le tuyau (50) comprend un réducteur (51) et un détendeur (52), avec une section de tuyau (53) à l'intérieur de et entre ceux-ci dont le diamètre est inférieur au diamètre du reste du tuyau (50), la section de tuyau (53) étant conçue pour être raccordée au raccord de tuyau (4) du réservoir (1).

9. Système selon une ou plusieurs des revendications précédentes, comprenant en outre une pompe de circulation (60) conçue pour amener le produit alimentaire liquide à s'écouler à travers le tuyau (50), où le raccord de tuyau (4) du réservoir (1) est facultativement raccordé au tuyau (50) sur un côté d'aspiration de la pompe de circulation (60),
la pompe de circulation (60) étant facultativement une pompe centrifuge,
le système comprenant facultativement en outre un réservoir à produit alimentaire liquide (80), un côté de pression de la pompe de circulation (60) étant raccordé au réservoir à produit alimentaire liquide (80),
la pompe de circulation (60) étant facultativement raccordée à une partie plus basse du réservoir à produit alimentaire liquide (80).

10. Système selon la revendication 9, dans lequel un côté d'aspiration de la pompe de circulation (60) est raccordé au réservoir à produit alimentaire liquide (80), préférablement à la partie plus basse du réservoir à produit alimentaire liquide (80).

11. Procédé d'adjonction d'additifs dans un produit alimentaire liquide en écoulement, comprenant les étapes suivantes :
• agencer un premier lot d'additifs dans un compartiment de réception d'additifs (2),
• transférer le premier lot d'additifs du compartiment de réception d'additifs (2) à une première chambre (3) en agençant une première soupape (5) agencée entre le compartiment de réception d'additifs (2) et la première chambre (3) dans une position ouverte,
• agencer la première soupape (5) dans une position fermée,
• ventiler la première chambre (3),
• adjoindre le premier lot d'additifs dans le produit alimentaire liquide en écoulement via un raccord de tuyau (4),
• tandis que le premier lot est dans la première chambre (3) et/ou le raccord de tuyau (4), agencer un deuxième lot d'additifs dans le compartiment de réception d'additifs (2) .

12. Procédé selon la revendication 11, où le deuxième lot d'additifs est agencé dans le compartiment de réception d'additifs (2) pendant la ventilation de la première chambre (3) et/ou l'adjonction du premier lot d'additifs dans le produit alimentaire liquide en écoulement.

13. Procédé selon la revendication 11 ou la revendication 12, comprenant en outre une ou plusieurs des étapes suivantes :
• mettre sous pression le raccord de tuyau (4) à une pression supérieure à la pression du produit alimentaire liquide dans le tuyau (50) lorsque le premier lot d'additifs est dans le raccord de tuyau (4), et/ou
• mettre sous pression le raccord de tuyau (4) à une pression comprise entre 0,1 et 4 barg, préférablement comprise entre 1,0 et 2,0 barg, par exemple 1,5 barg, lorsque le premier lot d'additifs est dans le raccord de tuyau (4), et/ou
• alimenter en gaz le raccord de tuyau (4) à un écoulement de gaz compris entre 0,1 et 2 bars, préférablement 0,2 bar supérieur à la pression dans le tuyau (50) dans lequel se trouve le produit alimentaire liquide en écoulement, lorsque le premier lot d'additifs est dans le raccord de tuyau (4).

14. Procédé selon une ou plusieurs des revendications 11 à 13, comprenant en outre les étapes suivantes après la ventilation de la première chambre (3) :
• transférer le premier lot d'additifs de la première chambre (3) à une deuxième chambre (8) en agençant une deuxième soupape (7) agencée entre la première chambre (3) et la deuxième chambre (8) dans une position ouverte,
• agencer la deuxième soupape (7) dans une position fermée,
• tandis que le premier lot d'additifs est dans la deuxième chambre (8) et/ou le raccord de tuyau (4), transférer le deuxième lot d'additifs du compartiment de réception d'additifs (2) à la première chambre (3).

15. Procédé selon la revendication 14, le procédé comprenant en outre :
• adjoindre le premier lot d'additifs dans le produit alimentaire liquide en écoulement tandis que le deuxième lot est dans la première chambre (3), et/ou
• ventiler la première chambre (3) tandis que le deuxième lot d'additifs est dans la première chambre (3) et tandis que le premier lot d'additifs est dans la deuxième chambre (8) et/ou le raccord de tuyau (4).
